Europäisches Patentamt

European Patent Office

Office européen des brevets

(11) Publication number: **0 436 982 A2**

## EUROPEAN PATENT APPLICATION

(21) Application number: 90203385.1

(22) Date of filing: **18.12.90**

(51) Int. Cl.5: **G01N 27/00, G01L 5/00**

(30) Priority: **10.01.90 NL 9000058**

(43) Date of publication of application:
**17.07.91 Bulletin 91/29**

(84) Designated Contracting States:
**DE FR GB**

(71) Applicant: **N.V. Philips' Gloeilampenfabrieken**
**Groenewoudseweg 1**
**NL-5621 BA Eindhoven(NL)**

(72) Inventor: **Oomen, Johannes Mathias**
**c/o INT. OCTROOIBUREAU B.V., Prof.**
**Holstlaan 6**
**NL-5656 AA Eindhoven(NL)**
Inventor: **Baalbergen, Johannes Jacobus**
**c/o INT. OCTROOIBUREAU B.V., Prof.**
**Holstlaan 6**
**NL-5656 AA Eindhoven(NL)**
Inventor: **Mesman, Wichert**
**c/o INT. OCTROOIBUREAU B.V., Prof.**
**Holstlaan 6**
**NL-5656 AA Eindhoven(NL)**
Inventor: **Moraal, Hendrik Karel**
**c/o INT. OCTROOIBUREAU B.V., Prof.**
**Holstlaan 6**
**NL-5656 AA Eindhoven(NL)**

(74) Representative: **Scheele, Edial François et al**
**INTERNATIONAAL OCTROOIBUREAU B.V.**
**Prof. Holstlaan 6**
**NL-5656 AA Eindhoven(NL)**

(54) **Scanning tip for a scanning tunnelling apparatus.**

(57) When a scanning tip for a scanning apparatus operating on tunnel current is made of boron-doped diamond, a highly wear resistant, suitably defined, chemically inert tip can be formed on the scanning tip which thus also exhibits adequate electrical conductivity. The scanning tip is preferably made of monocrystalline synthetic diamond whereto boron has been added during manufacture.

EP 0 436 982 A2

## SCANNING TIP FOR A SCANNING TUNNELLING APPARATUS.

The invention relates to a scanning tip for scanning a surface by means of a tunnel current to be generated between the scanning tip and the surface, to be scanned.

Scanning tunnelling apparatus are described in Scientific American Aug. 1985, pp. 40-55 as a scanning microscope, in EP 291.057 as a recording apparatus and Scientific American October 1989, pp. 74-81 contains a survey of different types of such apparatus. The material of a scanning tip for such apparatus should satisfy a number of requirements, notably resistance against damaging, possibility of suitably defined shaping, and in the present case adequate electrical conductivity for discharging the tunnel current. The known tip material tungsten offers satisfactory results, but the working of this material is comparatively inaccurate and its geometrical stability is often inadequate. Furthermore, tungsten has the drawback that it readily oxidises so that measurements become unreliable. As an alternative for tungsten use can be made of platinum or a platinum-irridium alloy. This material is suitably resistant against oxidation, has a suitable electrical conductivity, but notably its workability for the formation of a sharp tip and its geometrical stability are not satsifactory, so that such a scanning tip has a comparatively short service life. Suitably conductive metal scanning tips are generally comparatively soft and hence susceptible to mechanical damaging.

It is an object of the invention to mitigate the above drawbacks; to achieve this a scanning tip of the kind set forth in accordance with the invention is characterized in that the scanning tip contains boron-doped diamond.

Diamond is a known hard material, can be readily worked so as to form a sharp tip, and adequate electrical conductivity for the described purpose can be introduced by adapted doping. Adequate electrical conductivity can be achieved, for example by doping a surface layer of a suitably shaped scanning tip, for example by ion implantation.

In a preferred embodiment the diamond of the scanning tip is synthetically manufactured diamond already doped during its manufacture. The doping material is preferably boron with a concentration of, for example 1-300 ppm. The boron renders the diamond sufficiently electrically conductive and also increases its wear resistance. As a result, a scanning tip having an adequate geometrical stability and an adequate electrical conductivity can be realised. For example, using a sputter etching method (ion milling) a tip having a radius of less than approximately 50 nm can be formed on a diamond scanning tip.

Such a scanning tip is monocrystalline and exhibits a uniform dope concentration from a macroscopic point of view. For specific applications it may be advantageous to select a preferred orientation of the crystal faces, for example the 110 crystal face transversely of a longitudinal direction of the scanning tip. Resistance against mechanical damage can thus be enhanced and for a given dope concentration use can be made of a comparatively high electrical conductivity in the appropriate desirable longitudinal direction of the tip.

Scanning tips in accordance with the invention enable, due to their geometrical stability and fixed electrical conductivity, more reliable measurements to be performed, notably the phenomenon of measurement of mixed structures of tip and scanning surface also being avoided. Because of the high geometrical stability, a scanning tip in accordance with the invention also has a substantially longer service life.

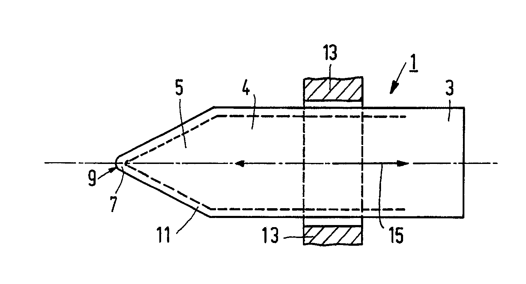

Some preferred embodiments in accordance with the invention will be described in detail hereinafter with reference to the drawing. The sole Figure of the drawing shows a scanning tip 1 which comprises, for example, a circular-cylindrical clamping portion 3 and a tip 5. An end 7 of the tip changes over into a substantially spherical shape 9 having a radius of curvature of, for example 50 nm or less. In the case of post-doped natural diamond the dope extends, for example across a surface layer 11 of, for example 100 nm. Such a dope should in any case extend as far as a portion of a clamping device 13 where the tunnel current is output. During the manufacture of doped synthetic diamond the boron atoms will exhibit a given preferred position for given crystal locations. As a result, this material may exhibit an anisotropy in the electrical conductivity within a given trajectory for the doping concentration. For that material it is advantageous to construct the scanning tip so as to have a preferred direction of the crystal faces, for example, the 110 crystal faces oriented transversely of a longitudinal direction 15 of the scanning tip. As has already been stated, the tip can be formed by sputter etching or a similar operation. High-quality tips can also be formed by splitting a diamond bar having the thickness of the cylindrical portion of the scanning tip which, of course may also have for example a square or other cross section, said splitting being realised by transverse etching at a given, low tensile force, for example the weight of a freely suspended portion thereof. A diamond bar to be used for this purpose may be synthetically formed so as to have that shape or may be formed from the II-b diamond occurring in nature.

## Claims

1. A scanning tip for scanning a surface by means of a tunnel current to be generated between the scanning tip and the surface to be scanned, characterized in that the scanning tip contains boron-doped diamond.

2. A scanning tip as claimed in Claim 1, characterized in that at least a part of the diamond of the scanning tip has a doping concentration which realises adequate electrical conductivity.

3. A scanning tip as claimed in Claim 1 or 2, characterized in that a surface layer of the diamond consists of doped material.

4. A scanning tip as claimed in Claim 1, characterized in that the doped diamond is a synthetic diamond.

5. A scanning tip as claimed in any one of the preceding Claims, characterized in that the doping concentration in a doped portion of the diamond is substantially uniform.

6. A scanning tip as claimed in any one of the preceding Claims, characterized in that the diamond of the scanning tip is monocrystalline.

7. A scanning tip as claimed in Claim 6, characterized in that 110 crystal faces of the diamond are oriented transversely of a longitudinal axis of the scanning tip.

8. A scanning tip as claimed in any one of the preceding Claims, characterized in that a tip having a radius of curvature of at the most approximately 50 nm is imparted to the scanning tip by sputter etching.

9. A scanning tip as claimed in any one of the Claims 1 to 7, characterized in that a tip having a radius of curvature of at the most approximately 50 nm is imparted to the scanning tip by chemical etching.